# EUROPÄISCHE PATENTSCHRIFT

(11) **EP 2 646 688 B1**
(45) Veröffentlichungstag und Bekanntmachung des Hinweises auf die Patenterteilung: **27.02.2019**
(21) Anmeldenummer: 11767727.8
(22) Anmeldetag: 12.10.2011
(51) Int. Cl.: F16K 15/02, F16K 15/06, F16K 1/36, F16K 25/00, F04B 53/10

(54) **VENTIL, INSBESONDERE AUSLASSVENTIL EINER HYDRAULISCHEN KOLBENPUMPE**
VALVE, IN PARTICULAR OUTLET VALVE OF A HYDRAULIC PISTON PUMP
SOUPAPE, EN PARTICULIER SOUPAPE DE DÉCHARGE D'UNE POMPE À PISTON HYDRAULIQUE

(30) Priorität: 30.11.2010 DE 102010062173
(43) Veröffentlichungstag der Anmeldung: 09.10.2013
(73) Patentinhaber: Robert Bosch GmbH, 70442 Stuttgart (DE)
(72) Erfinder: GAERTNER, Oliver, 74232 Abstatt (DE); SCHULLER, Wolfgang, 74389 Cleebronn (DE)
(86) Internationale Anmeldenummer: PCT/EP2011/067801
(87) Internationale Veröffentlichungsnummer: WO 2012/072322

(56) Entgegenhaltungen:
- EP-A1- 0 022 916
- DE-A1- 4 133 391
- DE-A1- 19 721 774
- DE-A1-102004 028 889
- DE-A1-102008 043 841
- DE-U1- 20 118 810
- GB-A- 2 037 953
- US-A- 2 011 547
- US-A- 4 545 404
- US-A1- 2010 090 138

## Beschreibung

### Stand der Technik

Die Erfindung betrifft ein Ventil, insbesondere ein Auslassventil einer hydraulischen Kolbenpumpe zum Fördern eines Fluids, mit einem Ventilsitz, in dem eine Ventilöffnung ausgebildet ist, und einem Ventilschließkörper, der auf dem Ventilsitz zum wahlweisen Öffnen und Schließen der Ventilöffnung angeordnet ist und einen elastischen Dichtwulst umfasst.

Hydraulische Kolbenpumpen, wie beispielsweise von Fahrzeugbremssystemen, weisen in der Regel als Ein- und Auslassventile Kugelventile auf, da diese relativ kostengünstig herzustellen sind.

Ein solches Ventil in Form eines Kugelventils ist gewöhnlich in einem Ventilgehäuse angeordnet, das auf einer Halterung eines in einem Zylinder ein- und ausfahrbaren Kolbens festgespannt ist. Das Einlassventil ist dazu vorgesehen, dass Fluid mittels einer Hubbewegung des Kolbens durch eine Einlassvorrichtung in einen Druckbereich im Inneren des Zylinders gesaugt werden kann. Durch das Auslassventil wird sodann das Fluid unter Druck aus dem Druckbereich in ein Hydrauliksystem zur Verrichtung von Arbeit gefördert.

Das Ventilgehäuse ist in der Regel becherförmig als ein Käfig gestaltet, in dessen Inneren sich eine schraubenförmige Rückstellfeder befindet, welche gegen einen kugelförmigen Schließkörper drängt. Der kugelförmige Schließkörper liegt dadurch an einem Ventilsitz an, der an der Stirnseite des Kolbens ausgebildet ist.

Wenn der Kolben mittels einer Rückstellfeder aus dem Zylinder herausgedrückt wird, so wird also der Schließkörper des Einlassventils von dem Ventilsitz gegen die Kraft der Rückstellfeder abgehoben, da ein Unterdruck im Zylinder aufgebaut wird. Bei dieser Bewegung des Kolbens wird das Einlassventil geöffnet und Fluid wird über die Einlassvorrichtung in den Druckbereich gesaugt. Wenn der Kolben in den Zylinder mittels eines Exzenters hineingedrückt wird, so schließt sich das Einlassventil und das Auslassventil wird geöffnet, indem dort der Schließkörper entgegen einer Federkraft einer schraubenförmigen Rückstellfeder abgehoben wird. Das Fluid wird aus dem Druckbereich in ein Hydrauliksystem zur Verrichtung von Arbeit gefördert.

DE 10 2008 043 841 A1 offenbart ein Kugelventil, insbesondere ein Hochdruckventil für Hochdruckpumpen von Brennstoffeinspritzanlagen, mit einer Ventilkugel und einer Ventilsitzfläche, wobei die Ventilkugel zum Unterbrechen einer Verbindung zwischen einem Zulauf und einem Ablauf mit der Ventilsitzfläche zu einem Dichtsitz zusammenwirkt. Die Ventilkugel ist dabei mittels einer schraubenförmigen Rückstellfeder gegen die Ventilsitzfläche gedrängt.

Des Weiteren offenbart DE 10 2004 028 889 A1 eine Kolbenpumpe zur Förderung von Hydraulikfluid, mit einem Zylinderelement, einem im Zylinderelement hin- und herbewegbaren Kolben und einem Kolbenraum, in welchem das Hydraulikfluid mittels des Kolbens druckbeaufschlagbar ist. Ferner umfasst die Kolbenpumpe ein Auslassventil und ein schlitzgesteuertes Einlassventil. Bei dem Auslassventil ist eine Ventilkugel als Schließkörper mittels einer scheibenförmigen Rückstellfeder gegen einen zugehörigen Ventilsitz gedrängt.

Aus DE 197 21 774 A1 ist ein Ventil für eine hydraulische Fahrzeugbremsanlage bekannt, bei dem ein topfförmiger elastomerer Dichtkörper mit einem Wulst an einer scheibenförmigenDichtfläche eines Ventilsitzkörpers anliegt.

Weiterhin sind aus den Dokumenten US 2 011 547 A; US 2010/0090138 A1; DE 201 18 810 U1 und aus der US 4 545 404 A Ventile bekannt, deren Ventilschließkörper aus wenigstens zwei Einzelteilen aufgebaut sind.

### Offenbarung der Erfindung

Erfindungsgemäß ist ein Ventil, insbesondere ein Auslassventil einer hydraulischen Kolbenpumpe zum Fördern eines Fluids, mit einem Ventilsitz, in dem eine Ventilöffnung ausgebildet ist, und einem Ventilschließkörper, der auf dem Ventilsitz zum wahlweisen Öffnen und Schließen der Ventilöffnung angeordnet ist und einen elastischen Dichtwulst umfasst, geschaffen, wobei der Dichtwulst auf einer sich zur Ventilöffnung hin konisch verjüngenden Mantelfläche des Ventilschließkörpers in Form einer Erhöhung als umlaufender Ring angeordnet ist und dort mit dem Ventilsitz im geschlossenen Zustand der Ventilöffnung einen Dichtsitz bildet.

Die hydraulische Kolbenpumpe umfasst vorzugsweise einen zylindrischen Kolben, der in einem Innenraum eines Zylinders ein- und ausfahrbar gelagert ist. Im Innenraum des Zylinders ist ein mit einem Fluid gefüllter Druckbereich vorgesehen und abgedichtet. Beim Ausfahren des Kolbens aus dem Zylinder wird in dem Druckbereich ein Unterdruck aufgebaut und der Kolben saugt über ein Einlassventil Fluid in den Druckbereich. Beim Einfahren drängt der Kolben das Fluid über ein Auslassventil vom Druckbereich in ein Hydrauliksystem zur Verrichtung von Arbeit.

Unter einem Fluid ist vorliegend ein Gas und/oder eine Flüssigkeit zu verstehen, wie etwa eine Hydraulikflüssigkeit auf Mineralöl- oder Glycolbasis.

Das Einlassventil und/oder Auslassventil ist vorteilhaft als ein erfindungsgemäßes Ventil gestaltet. Das erfindungsgemäße Ventil weist einen Ventilsitz mit einer Ventilöffnung und einen Ventilschließkörper auf. Der Ventilsitz umfasst eine Vorderseite und eine Rückseite, wobei unter der Rückseite des Ventilsitzes die Seite zu verstehen ist, auf der das Fluid in die Ventilöffnung hineinströmt und unter der Vorderseite die Seite, an der das Fluid aus der Ventilöffnung herausströmt. Der Ventilschließkörper ist auf der Vorderseite des Ventilsitzes angeordnet.

Während des Ausfahrens des Kolbens aus dem Zylinder wird Fluid durch das Einlassventil infolge des erzeugten Unterdrucks in den Druckbereich gesaugt. Dabei wird der Ventilschließkörper vom Ventilsitz über eine bestimmte Strecke abgehoben und das Fluid strömt durch die Ventilöffnung in den Druckbereich. Das Auslassventil ist während des Ausfahrens des Kolbens aus dem Zylinder im Wesentlichen fluiddicht verschlossen.

Beim Einfahren des Kolbens in den Zylinder ist das Einlassventil geschlossen. Infolge des im Druckbereich erzeugten Drucks wird der Ventilschließkörper des Auslassventils abgehoben und die Ventilöffnung ist geöffnet. Fluid strömt sodann aus dem Druckbereich entlang des Auslassventils in ein Hydrauliksystem zur Verrichtung von Arbeit.

Erfindungsgemäß umfasst der Ventilschließkörper einen Dichtwulst, der mit dem Ventilsitz im geschlossenen Zustand der Ventilöffnung einen Dichtsitz bildet. Dieser Dichtwulst ist auf einer äußeren Mantelfläche des Ventilschließkörpers angeordnet und um die Mantelfläche herum umlaufend gestaltet. Der Dichtwulst bildet dabei einen geschlossenen Ring, der an dem Ventilsitz anliegt, während der restliche Ventilschließkörper nicht mit dem Ventilsitz in Kontakt gerät.

Wenn der Ventilschließkörper mittels eines Rückstellmittels gegen den Ventilsitz gedrängt wird, so wird der Dichtwulst gegen diesen Ventilsitz gepresst, wodurch ein im Wesentlichen fluiddichter Dichtsitz zur Verfügung gestellt wird. Die Ventilöffnung ist verschlossen.

Es ist somit eine platzsparende und kompakte Konstruktion bzw. Bauweise, insbesondere eines Auslassventils, geschaffen, bei der der Ventilschließkörper zuverlässig und im Wesentlichen fluiddicht die Ventilöffnung verschließt.

Während des Herstellungsprozesses der hydraulischen Kolbenpumpe erfolgt in der Regel im Rahmen einer Qualitätssicherung eine so genannte pneumatische Dichtheitsprüfung, insbesondere eine Niederdruckprüfung der Ventile. Infolge des Einsatzes des erfindungsgemäßen Ventils mit dem erläuterten Dichtwulst ist die Dichtigkeit der Kolbenpumpe signifikant verbessert, wodurch ein Ausschuss an fehlerhaften Ventilen aufgrund einer zu hohen Leckage vorteilhaft reduziert wird. Hierdurch können insgesamt die Produktionskosten der hydraulischen Kolbenpumpe gesenkt werden. Die Dichtqualität der Kolbenpumpe ist verbessert.

Der Dichtwulst ist als eine auf der äußeren Mantelfläche des Ventilschließkörpers umlaufende Dichtkante in Form einer Erhöhung als umlaufender Dichtsteg bzw. als ein dünner Ring gestaltet. Die Dichtkante ist vorzugsweise im Querschnitt betrachtet im Wesentlichen halbrund gestaltet. Eine solche Dichtkante bzw. Dichtsteg stellt eine besonders gute Abdichtung bzw. einen besonders dichten Dichtsitz zur Verfügung. Der Dichtwulst ist elastisch gestaltet. Vorliegend ist der Dichtwulst in Form einer Dichtkante aus einem elastischen Material, vorzugsweise aus einem elastischen Kunststoff gefertigt. Während eines Verschließens des Ventils verformt sich der Dichtwulst elastisch, das heißt, der Dichtwulst passt sich einer Kontur des Ventilsitzes an, wodurch eine hohe Dichtigkeit des Dichtsitzes zur Verfügung gestellt wird.

Erfindungsgemäß sind der Ventilschließkörper und der Dichtwulst einstückig gebildet.

Eine solche so genannte Ventilschließkörper-Dichtwulst-Einheit ist robust und kostengünstig herstellbar. Sie ist vorzugsweise als ein Spritzgussteil gefertigt. Der Dichtwulst kann im Wesentlichen kostenneutral zur Verfügung gestellt werden, wenn eine Form des Dichtwulstes bereits in einem Spritzgusswerkzeug bzw. in einer Spritzgussform integriert ist.

Gemäß einer zweckmäßigen Weiterbildung des erfindungsgemäßen Ventils ist der Ventilschließkörper plattenförmig oder kalottenförmig gestaltet.

Ein derartiges Ventil stellt einen plattenförmigen Ventilschließkörper zur Verfügung, der im Vergleich zu einem kugelförmigen Ventilschließkörper eine relativ geringe Höhe bzw. Dimension aufweist. Aufgrund der geringeren Höhe eines solchen Ventilschließkörpers kann ein Einlass- und/oder Auslassventil geschaffen werden, das ein sehr geringes Totvolumen aufweist, wodurch der Wirkungsgrad der hydraulischen Kolbenpumpe gesteigert wird.

Der Ventilschließkörper kann auch wahlweise als eine Kugelkalotte, das heißt als ein bestimmtes Kugelsegment bzw. ein bestimmter Kugelabschnitt, als eine Halbkugel oder auch als ein Kegel gestaltet sein.

Das Ventil umfasst vorzugsweise ein Rückstellmittel auf einer Ausströmseite des Ventils, das den Ventilschließkörper mit einer Rückstellkraft beaufschlagt, die den Ventilschließkörper gegen den Ventilsitz drängt.

Die Ausströmseite des erfindungsgemäßen Ventils ist auch als die Vorderseite des Ventils bzw. als die Vorderseite des Ventilsitzes definiert.

Das Rückstellmittel, vorzugsweise in Form einer Rückstellfeder, kann als ein länglich gestalteter Federdraht oder auch als eine eben gewundene Biegefeder, wie ein Federring bzw. Federteller, eine Blattfeder oder auch eine Spiralfeder, gestaltet sein. Die Blattfeder besteht bevorzugt aus einem flachen Metallband oder Metalldraht, der bogenförmig vorgespannt ist. Die Spiralfeder ist vorzugsweise aus einem in einer Ebene spiralförmig aufgewickelten Metallband oder Metalldraht gefertigt. Eine Spiralfeder oder auch ein Federring sind besonders einfach im Ventil zu montieren. Die Rückstellfeder ist bevorzugt aus einem Federstahl hergestellt, wie etwa aus einer Kupfer-Beryllium-Legierung.

Dieses Rückstellmittel liegt auf dem Ventilschließkörper auf, das heißt das Rückstellmittel drängt den Ventilschließkörper mit einer definierten Spannkraft von der Vorderseite des Ventilsitzes her gegen den Ventilsitz. Wenn ein Sog bzw. Druck am Ventilschließkörper anliegt, der größer ist als die Rückstellkraft des Rückstellmittels, so deformiert sich das Rückstellmittel während des Abhebens des Ventilschließkörpers vom Ventilsitz entsprechend des zurückgelegten Wegs des Ventilschließkörpers. Der Ventilschließkörper wird also mit einer Rückstellkraft beaufschlagt, so dass dieser schnell und leicht schließt und dabei mittels des Dichtwulstes einen im Wesentlichen fluiddichten Verschluss - den Dichtsitz - bildet.

Gemäß einer weiteren vorteilhaften Weiterbildung des erfindungsgemäßen Ventils umfasst der Ventilschließkörper ein sich in die Ventilöffnung erstreckendes Führungsmittel zum Führen des Ventilschließkörpers relativ zum Ventilsitz.

Gemäß einer derartigen Weiterbildung umfasst das Ventil ein Führungsmittel, das in der Ventilöffnung angeordnet und mit dem Ventilschließkörper verbunden ist. Dieses Führungsmittel positioniert den Ventilschließkörper auf dem Ventilsitz, das heißt es führt während des Öffnens und Schließens des Ventils den Ventilschließkörper auf einer definierten Strecke. Während des Schließens des Ventils führt das Führungsmittel den Ventilschließkörper insbesondere auf eine vordefinierte Position auf dem Ventilsitz, wo der Dichtwulst des Ventilschließkörpers mit dem Ventilsitz mittels des Dichtsitzes einen im Wesentlichen fluiddichten Verschluss bildet.

Das Führungsmittel ist hierfür vorzugsweise als ein länglich ausgebildeter Absatz bzw. Abschnitt gestaltet, der auf einer Stirnseite des Ventilschließkörpers, die der Ventilöffnung zugewandt ist, angeordnet ist. Dieser längliche Absatz ist im Inneren der Ventilöffnung aufgenommen.

Der Ventilschließkörper und das Führungsmittel sind vorzugsweise einstückig als ein Spritzgussteil gestaltet.

Gemäß einer weiteren Weiterbildung weist das Führungsmittel mindestens eine fluidleitende Aussparung und mindestens einen Bereich auf, der zum Führen des Ventilschließkörpers an einer inneren Wandung der Ventilöffnung zum Anliegen kommen kann.

Das Führungsmittel weist mindestens einen Bereich auf, der zum Führen des Ventilschließkörpers an einer inneren Wandung der Ventilöffnung anliegt. Mindestens ein weiterer Bereich - eine fluidleitende Aussparung - ist dabei von der inneren Wandung der Ventilöffnung beabstandet und bewerkstelligt, dass das Fluid bei abgehobenen Ventilschließkörper zwischen der inneren Wandung der Ventilöffnung und einer äußeren Wandung des Führungsmittels durch die Ventilöffnung hindurchströmen kann. Das Führungsmittel ist also in mindestens zwei Bereiche gegliedert, und zwar in einen Bereich, der an der inneren Wandung der Ventilöffnung anliegt und dadurch eine genaue Führung des Ventilschließkörpers in axialer und radialer Richtung bewerkstelligt, und zum anderen in einen ausgesparten Bereich der - im Falle eines Auslassventils - eine fluidleitende Verbindung zwischen einem Kompressionsraum, das heißt dem Druckbereich, und einer Hochdruckseite, das heißt dem Hydrauliksystem, zur Verfügung stellt.

Der mindestens eine Bereich zum Führen des Ventilschließkörpers ist vorzugsweise als ein Steg bzw. Rippe gebildet, der bzw. die axial an der inneren Wandung der Ventilöffnung anliegt. Das Führungsmittel weist insbesondere zwei bis sechs, vorzugsweise vier Stege bzw. Rippen auf, die im Wesentlichen gleichmäßig zueinander beabstandet und alternierend zu den fluidleitenden Aussparungen angeordnet sind.

Des Weiteren ist die Aufgabe gemäß der Erfindung mittels einer hydraulischen Kolbenpumpe mit einem erfindungsgemäßen Ventil gelöst.

Die erfindungsgemäße hydraulische Kolbenpumpe umfasst einen Zylinder und einen in dem Zylinder ein- und ausfahrbar gelagerten Kolben. Im Innenraum des Zylinders ist ein mit einem Fluid gefüllter Druckbereich gebildet. Beim Ausfahren des Kolbens aus dem Zylinder wird in dem Druckbereich ein Unterdruck aufgebaut und der Kolben saugt über ein Einlassventil Fluid in den Druckbereich. Beim Einfahren drängt der Kolben hingegen das Fluid über ein Auslassventil vom Druckbereich in ein Hydrauliksystem zur Verrichtung von Arbeit.

Das Einlass- und/oder Auslassventil ist in vorteilhafterweise als ein erfindungsgemäßes Ventil gemäß den oben genannten Merkmalen und Vorteilen gestaltet. Ein solches Ventil gewährleistet zum einen eine hohe Robustheit und ein gutes Abdichtverhalten. Insbesondere kann eine Verbesserung der Dichtqualität bei einer pneumatischen Dichtheitsprüfung bei der Fertigung der Ventile erzielt werden. Hierdurch wird der Ausschuss an Ventilen, die die Dichtheitsprüfung nicht bestehen, verringert, so dass die Produktionskosten insgesamt gesenkt werden können.

Schließlich ist ein Fahrzeugbremssystem mit einer erfindungsgemäßen hydraulischen Kolbenpumpe zur Verfügung gestellt.

Das erfindungsgemäße Fahrzeugbremssystem umfasst eine hydraulische Kolbenpumpe mit einem erfindungsgemäßen Ventil gemäß den oben erläuterten Merkmalen und Vorteilen.

Ein derartiges Fahrzeugbremssystem kann beispielsweise ein Anti-Blockier-System (ABS), eine Antriebsschlupfregelung (TCS - traction control system), ein elektronisches Stabilisierungsprogramm (ESP) oder auch ein elektrohydraulisches Bremssystem (EHB) sein. Bei solchen Systemen ist es insbesondere von Vorteil, wenn die hydraulischen Kolbenpumpen robuste und gleichzeitig kostengünstig herzustellende Ventile aufweisen, die eine hohe Dichtigkeit gewährleisten und eine optimale Funktion des Bremssystems bei einer langen Laufleistung zur Verfügung stellen.

### Kurzbeschreibung der Zeichnungen

Nachfolgend wird ein Ausführungsbeispiel der erfindungsgemäßen Lösung anhand der beigefügten Zeichnungen näher erläutert: Es zeigen:
- Fig. 1: einen Längsschnitt eines Auslassventils einer hydraulischen Kolbenpumpe gemäß dem Stand der Technik,
- Fig. 2: eine Ansicht eines Ventilschließkörpers mit einem erfindungsgemäßen Dichtwulst,
- Fig. 3: eine Ansicht eines erfindungsgemäßen Ventils, und
- Fig. 4: den Schnitt IV - IV in Fig. 3 in vergrößerter Darstellung.

### Beschreibung von Ausführungsformen

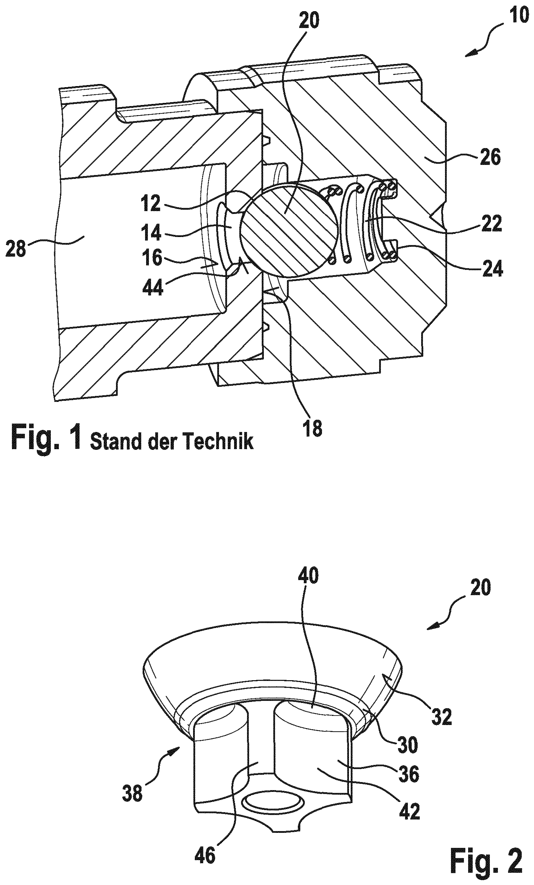

Fig. 1 zeigt ein Auslassventil 10 einer hydraulischen Kolbenpumpe gemäß dem Stand der Technik. Das Ventil 10 umfasst einen Ventilsitz 12, der von einer im Wesentlichen kreisförmige Ventilöffnung 14 durchbrochen ist.

Der Ventilsitz 12 weist eine Vorderseite 16 und eine Rückseite 18 auf, wobei die Rückseite 18 als die Seite definiert ist, auf der das Fluid, im Vorliegenden eine Bremsflüssigkeit, in die Ventilöffnung 14 hineinströmt, und die Vorderseite 16 als die Seite, auf der das Fluid aus der Ventilöffnung 14 herausströmt.

Das Ventil 10 umfasst ferner einen kugelförmigen Ventilschließkörper 20, der auf der Vorderseite 18 des Ventilsitzes 12, das heißt auf der Ausströmseite, zum wahlweisen öffnen und schließen der Ventilöffnung 14 angeordnet ist.

Der Ventilschließkörper 20 wird mittels eines Rückstellmittels 22, vorliegend einer Spiralfeder, mit einer Rückstellkraft beaufschlagt, die den Ventilschließkörper 20 gegen die Vorderseite 18 des Ventilsitzes 12 drängt. Das Rückstellmittel 22 ist auf der Ausströmseite 18 des Ventils 10 angeordnet und übt somit auf den Ventilschließkörper 20 eine Druckkraft aus. Das Rückstellmittel 22 ist hierbei auf einer der Ventilöffnung 14 abgewandten Seite des Ventilschließkörpers 20 gelagert und an einem Absatz 24 eines Ventildeckels 26 gehaltert.

Wenn der auf den Ventilschließkörper 20 ausgeübte Druck größer ist als die Rückstellkraft des Rückstellmittels 22, so wird der Ventilschließkörper 20 vom Ventilsitz 12 abgehoben und das Fluid wird in ein Hydrauliksystem - auf die so genannte Hochdruckseite - zur Verrichtung von Arbeit geleitet. Das Auslassventil 10 trennt also einen Kompressionsraum 28 der hydraulischen Kolbenpumpe von der Hochdruckseite.

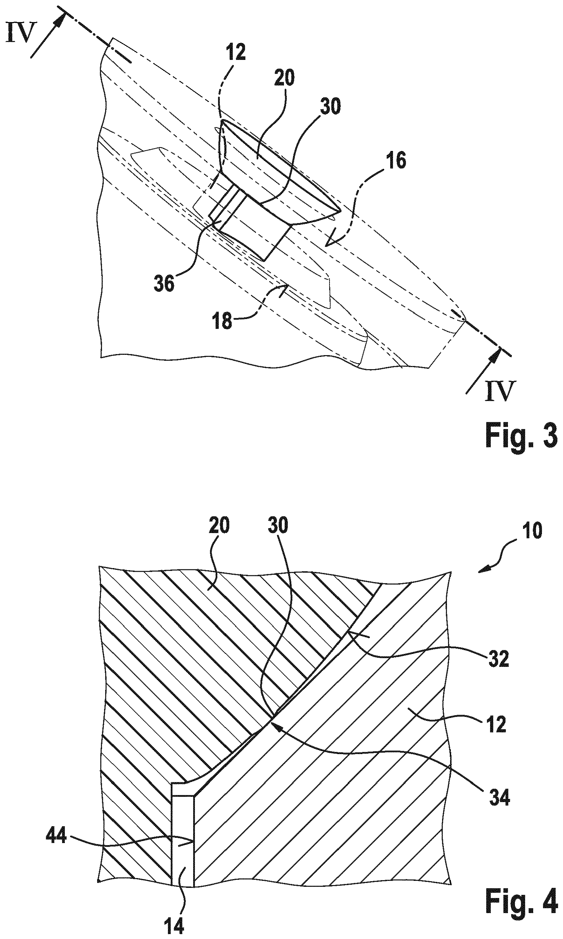

Fig. 2 zeigt einen erfindungsgemäßen Ventilschließkörper 20 mit einem Dichtwulst 30. Dieser Ventilschließkörper 20 ist dem Auslassventil 10 der hydraulischen Kolbenpumpe gemäß Fig. 1 zugeordnet. Die hydraulische Kolbenpumpe ist in einem Fahrzeugbremssystem integriert. Fig. 3 zeigt den Ventilschließkörper 20, wie er dem Ventilsitz 12 zugeordnet ist.

Der Ventilschließkörper 20 ist im Wesentlichen halbkugelförmig bzw. kalottenförmig gestaltet, da ein solcher Ventilschließkörper 20 insbesondere einen geringen Bauraum in der Kolbenpumpe benötigt. Es sind jedoch auch andere Geometrien denkbar, wie etwa plattenförmige oder kegelförmige Ventilschließkörper 20.

Auf einer sich zur Ventilöffnung 14 hin konisch verjüngenden und zugleich leicht gewölbten Mantelfläche 32 des Ventilschließkörpers 20 ist der Dichtwulst 30 in Form einer elastisch gebildeten Erhöhung bzw. Dichtkante umlaufend angeordnet. Die Erhöhung ist im Querschnitt betrachtet im Wesentlichen ein mehr oder weniger abgeflachter Halbkreis.

Im geschlossenen Zustand des Ventils 10, das heißt, wenn das Rückstellmittel 22 eine Rückstellkraft auf den Ventilschließkörper 20 ausübt und dieser auf dem Ventilsitz 12 aufliegt, bildet der Dichtwulst 30 mit dem Ventilsitz 12 einen fluiddichten Dichtsitz 34 (vgl. Fig. 4). Die Ventilöffnung 14 ist also fluiddicht verschlossen.

Der Dichtwulst 30 bzw. die Dichtkante wird während eines Schließvorgangs des Ventils 10 aufgrund ihrer relativ geringen Größe und elastischen Eigenschaft verformt und passt sich dabei der Kontur des Ventilsitzes 12 an. Hierdurch wird eine hohe Dichtigkeit des Ventils 10 gewährleistet.

Eine pneumatische Dichtheitsprüfung im Rahmen der Qualitätsüberprüfung der derartigen hydraulischen Kolbenpumpe bzw. des Ventils 10 während des Fertigungsprozesses hat ergeben, dass die Dichtigkeit signifikant verbessert ist. Vor allem wirkt sich der Dichtwulst 30 sehr positiv bei einer Niederdruckprüfung aus. Der Ausschuss an fehlerhaften Ventilen 10 aufgrund einer zu hohen Leckage wird reduziert, wodurch die Produktionskosten gesenkt werden.

Der Ventilschließkörper 20 mit dem umlaufenden feinen Dichtwulst 30 umfasst ferner ein Führungsmittel 36, das zusammen mit dem Ventilschließkörper 20 eine Ventilschließkörper-Führungsmittel-Einheit 38 bildet. Diese Ventilschließkörper-Führungsmittel-Einheit 38 ist einstückig als Kunststoff-Spritzgussteil geformt.

Wenn die Ventilschließkörper-Führungsmittel-Einheit 38 in das Ventil 10 eingesetzt ist (vgl. Fig. 3), dann erstreckt sich das Führungsmittel 36 in die Ventilöffnung 14 und führt während eines Öffnen und Schließens des Ventils 10 den Ventilschließkörper 20 relativ zum Ventilsitz 12.

Hierfür ist das Führungsmittel 36 als ein zylinderförmiger Absatz 40 gebildet, der an der der Ventilöffnung 14 zugewandten Stirnfläche des Ventilschließkörpers 20 ansetzt und sich in die Ventilöffnung 14 erstreckt. Das Führungsmittel 36 ist in der Ventilöffnung 14 derart aufgenommen, dass es mit vier fluidleitenden Aussparungen 42 von einer inneren Wandung 44 der Ventilöffnung 14 beabstandet ist. Vier zu den fluidleitenden Aussparungen 42 alternierend angeordnete Bereiche 46 liegen hingegen an der inneren Wandung 44 der Ventilöffnung 14 an. Diese Bereiche 46 sind dafür vorgesehen, den Ventilschließköper 20 während des Öffnens und Schließens in axialer und radialer Richtung zu führen und auf dem Ventilsitz 12 exakt zu positionieren. Der Ventilschließkörper 20 wird auf einer definierten Strecke geführt. Aufgrund der derartigen Führung des Ventilschließkörpers 20 wird ein ungewolltes Auslenken des Ventilschließkörpers 20 verhindert.

Wenn der Ventilschließkörper 20 von dem Ventilsitz 12 abgehoben wird, dann strömt das Fluid entlang der fluidleitenden Aussparungen 42 durch das Ventil 10.

Die Bereiche 46 zum Führen des Ventilschließkörpers 20, die an der inneren Wandung 44 der Ventilöffnung 14 anliegen, sind vorliegend als vier im Wesentlichen gleichmäßig zueinander beabstandete Stege 46 gebildet, die sich in Axialrichtung erstrecken. Während des Öffnens und Schließens des Ventils 10 gleiten diese Stege 46 also in Längserstreckung der Ventilöffnung 14 an dessen innerer Wandung 44 vorbei.

Es ist ein kostengünstiges und robustes Ventil 10 geschaffen, das eine gute Dichtwirkung bei einem leichten und schnellen sowie präzisen Schließverhalten gewährleistet und einfach in eine hydraulische Kolbenpumpe zu integrieren ist. Der Dichtwulst 30 bzw. Dichtkante gewährleistet eine hohe pneumatische Dichtigkeit des Ventils 10. Ferner weist die Ventilschließkörper-Führungsmittel-Einheit 38 eine kompakte Bauweise auf, wodurch eine platzsparende Konstruktion des Ventils 10 gewährleistet ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

## Patentansprüche

1. Ventil (10), insbesondere Auslassventil (10) einer hydraulischen Kolbenpumpe zum Fördern eines Fluids, mit einem Ventilsitz (12), in dem eine Ventilöffnung (14) ausgebildet ist, und einem Ventilschließkörper (20), der auf dem Ventilsitz (12) zum wahlweisen Öffnen und Schließen der Ventilöffnung (14) angeordnet ist und einen elastischen Dichtwulst (30) umfasst, **dadurch gekennzeichnet,**
**dass** der Ventilschließkörper (20) mit dem Dichtwulst (30) einstückig ausgebildet ist und dass der Dichtwulst (30) auf einer sich zur Ventilöffnung (14) hin konisch verjüngenden und zugleich leicht gewölbten Mantelfläche (32) des Ventilschließkörpers (20) in Form einer Erhöhung als umlaufender Ring angeordnet ist und dort mit dem Ventilsitz (12) im geschlossenen Zustand der Ventilöffnung (14) einen Dichtsitz (34) bildet, während der restliche Ventilschließkörper (20) nicht mit dem Ventilsitz (12) in Kontakt gerät.

2. Ventil (10) nach Anspruch 1,
**dadurch gekennzeichnet, dass** der Ventilschließkörper (20) ein sich in die Ventilöffnung (14) erstreckendes Führungsmittel (36) zum Führen des Ventilschließkörpers (20) relativ zum Ventilsitz (12) umfasst.

3. Ventil (10) nach Anspruch 2,
**dadurch gekennzeichnet, dass** das Führungsmittel (36) mindestens eine fluidleitende Aussparung (42) und mindestens einen Bereich (46) aufweist, der zum Führen des Ventilschließkörpers (20) an einer inneren Wandung (44) der Ventilöffnung (14) anliegt.

4. Ventil (10) nach einem der vorhergehenden Ansprüche,
**dadurch gekennzeichnet, dass** das Ventil (10) ein Rückstellmittel (22) auf einer Ausströmseite (18) des Ventils (10) umfasst, das den Ventilschließkörper (20) mit einer Rückstellkraft beaufschlagt, die den Ventilschließkörper (20) gegen den Ventilsitz (12) drängt.

5. Ventil (10) nach einem der vorhergehenden Ansprüche, **dadurch gekennzeichnet, dass** der Ventilschließkörper (20) kalottenförmig gebildet ist.

## Claims

1. Valve (10), in particular an outlet valve (10) of a hydraulic piston pump for delivering a fluid, comprising a valve seat (12) in which a valve orifice (14) is formed and a valve closing body (20) which is arranged on the valve seat (12) for selectively opening and closing the valve orifice (14) and comprises an elastic sealing bead (30), **characterized in that** the valve closing body (20) is formed in one piece with the sealing bead (30) and **in that** the sealing bead (30) is arranged in the form of an elevation as a circumferential ring on a lateral surface (32) of the valve closing body (20) which narrows conically towards the valve orifice (14) and is at the same time slightly convex where it forms a sealing fit (34) with the valve seat (12) in the closed state of the valve orifice (14), while the remaining part of the valve closing body (20) does not come into contact with the valve seat (12).

2. Valve (10) according to Claim 1,
**characterized in that** the valve closing body (20) includes a guide means (36) which extends into the valve orifice (14) in order to guide the valve closing body (20) relative to the valve seat (12).

3. Valve (10) according to Claim 2,
**characterized in that** the guide means (36) has at least one fluid-conducting recess (42) and at least one region (46) which rests against an inner wall (44) of the valve orifice (14) for guidance of the valve closing body (20).

4. Valve (10) according to any one of the preceding claims,
**characterized in that** the valve (10) includes on an outflow side (18) of the valve (10) a restoring means (22) which loads the valve closing body (20) with a restoring force urging the valve closing body (20) against the valve seat (12).

5. Valve (10) according to any one of the preceding claims,
**characterized in that** the valve closing body (20) is of dome-shaped configuration.

## Revendications

1. Soupape (10), en particulier soupape de décharge (10) d'une pompe à piston hydraulique servant à refouler un fluide, comprenant un siège de soupape (12) dans lequel est formée une ouverture de soupape (14), et un corps d'obturation de soupape (20) qui est disposé sur le siège de soupape (12) pour sélectivement ouvrir et fermer l'ouverture de soupape (14) et comporte un bourrelet d'étanchéité élastique (30), **caractérisée en ce que** le corps d'obturation de soupape (20) est formé d'un seul tenant avec le bourrelet d'étanchéité (30), et **en ce que** le bourrelet d'étanchéité (30) est disposé sur une surface d'enveloppe (32), se rétrécissant de manière conique en direction de l'ouverture de soupape (14) et en même temps légèrement bombée, du corps d'obturation de soupape (20), sous la forme d'un relief en tant que bague périphérique, et y forme un siège d'étanchéité (34) avec le siège de soupape (12) à l'état fermé de l'ouverture de soupape (14), tandis que le reste du corps d'obturation de soupape (20) ne vient pas en contact avec le siège de soupape (12).

2. Soupape (10) selon la revendication 1, **caractérisée en ce que** le corps d'obturation de soupape (20) comporte un moyen de guidage (36), s'étendant dans l'ouverture de soupape (14), servant à guider le corps d'obturation de soupape (20) par rapport au siège de soupape (12).

3. Soupape (10) selon la revendication 2, **caractérisée en ce que** le moyen de guidage (36) comprend au moins un évidement (42) acheminant un liquide et au moins une région (46) qui s'appuie contre une paroi intérieure (44) de l'ouverture de soupape (14) pour guider le corps d'obturation de soupape (20).

4. Soupape (10) selon l'une quelconque des revendications précédentes,
**caractérisée en ce que** la soupape (10) comporte un moyen de rappel (22) sur un côté de sortie (18) de la soupape (10), lequel moyen de rappel sollicite le corps d'obturation de soupape (20) avec une force de rappel qui pousse le corps d'obturation de soupape (20) contre le siège de soupape (12).

5. Soupape (10) selon l'une quelconque des revendications précédentes,
**caractérisée en ce que** le corps de fermeture de soupape (20) est en forme de calotte.
